# EUROPEAN PATENT APPLICATION

(11) **EP 4 523 825 A1**
(43) Date of publication of application: **19.03.2025**
(21) Application number: 24195081.5
(22) Date of filing: 19.08.2024
(51) Int. Cl.: B23D 51/16

(54) **RECIPROCATING POWER TOOL**

(30) Priority: 14.09.2023 CN 202311188088
(71) Applicant: Nanjing Chervon Industry Co., Ltd., Nanjing, Jiangsu 211106 (CN)
(72) Inventor: LIU, Lai, Nanjing (CN); ZHU, Huaguo, Nanjing (CN)
(74) Representative: Sun, Yiming

(57) **Abstract**

A reciprocating power tool (100) includes a housing (10), a power assembly (20) including an electric motor (21), a transmission assembly (32) connected to the power assembly (20), a reciprocating assembly (31) connected to the transmission assembly (32) performing a reciprocating motion and mountable with a working accessory (50) for an operation and a balancing component (331) for balancing a motion of the reciprocating assembly (31). A maximum distance the centroid (C1) of the reciprocating assembly (31) moves is a first distance L1, a maximum distance the centroid (C2) of the balancing component (331) moves is a second distance L2, the mass of the reciprocating assembly (31) is a first mass M1 and the mass of the balancing component (331) is a second mass M2. The ratio of a product M2·L2 of the second mass M2 and the second distance L2 to a product M1·L1 of the first mass M1 and the first distance L1 is greater than 1.05.

## Description

This application claims priority to Chinese Patent Application No. CN 202311188088.X filed on Sep. 14, 2023, the disclosure of which is incorporated herein by reference in their entireties.

### TECHNICAL FIELD

The present application relates to a power tool and, in particular, to a reciprocating power tool.

### BACKGROUND

In the related art, a reciprocating saw is a cutting tool for cutting with a reciprocating saw blade and is a reciprocating power tool. The reciprocating saw is often used for cutting metal, wood, and the like and generally includes a housing, an electric motor, a transmission mechanism, and a cutting saw blade. The torque of the electric motor is converted into a reciprocating motion of the saw blade through the transmission mechanism to implement cutting.

Generally, saw blades of different sizes can be installed on the reciprocating saw. The weight of the saw blade varies from 10 g or 20 g to 40 g, 50 g, 60 g, etc. In practical operations, more and more users tend to use large saw blades for cutting. Since a large saw blade has a larger mass than a small saw blade, the no-load vibration of the reciprocating saw with the large saw blade installed is significantly greater than that of the reciprocating saw with the small saw blade installed.

In addition to the reciprocating saw, the reciprocating power tool may include other power tools that implement operations through a reciprocating motion of a working accessory, such as a jigsaw. A balancing component is often provided in these reciprocating power tools to balance a motion of a reciprocating assembly.

This part provides background information related to the present application, and the background information is not necessarily the existing art.

### SUMMARY

The present application adopts the technical solutions described below.

A reciprocating power tool includes a housing; a power assembly including an electric motor; a transmission assembly connected to the power assembly; a reciprocating assembly connected to the transmission assembly and performing a reciprocating motion; and a balancing component for balancing a motion of the reciprocating assembly. A maximum distance the centroid of the reciprocating assembly moves is a first distance L1; a maximum distance the centroid of the balancing component moves is a second distance L2; the mass of the reciprocating assembly is a first mass M1, and the mass of the balancing component is a second mass M2; the ratio of a product M2 L2 of the second mass M2 and the second distance L2 to a product M1 L1 of the first mass M1 and the first distance L1 is a first ratio, where the first ratio is greater than 1.05, that is, (M2·L2)/(M1·L1) is greater than 1.05.

In an example, the balancing component moves along a direction substantially opposite to a motion direction of the reciprocating assembly to balance the reciprocating motion of the reciprocating assembly.

In an example, the transmission assembly includes a first transmission member, a transmission spindle, and an eccentric member, the transmission spindle extends along a spindle axis, the first transmission member is driven by the electric motor to rotate around the spindle axis, and the eccentric member rotates with the first transmission member to drive the reciprocating assembly to perform the reciprocating motion.

In an example, the centroid of the transmission assembly is a third centroid C3, and the distance between the third centroid C3 and the spindle axis is less than 2 mm.

In an example, the centroid of the transmission assembly is a third centroid C3, and the distance between the third centroid C3 and the spindle axis is less than 1 mm.

In an example, the electric motor includes a motor shaft rotatable around a first axis, and the first axis extends substantially along a front and rear direction of the reciprocating power tool.

In an example, the first ratio is greater than 1.07.

In an example, the first ratio is greater than 1.1.

In an example, the first ratio is less than 1.5.

In an example, the reciprocating power tool further includes a detection device and a controller, where the detection device is configured to detect an electrical signal of the electric motor, and when determining that the reciprocating power tool is in a no-load state, the controller reduces an idle speed of the electric motor.

In an example, the reciprocating assembly is mountable with a working accessory for an operation.

In an example, a total mass of the working accessory and the reciprocating assembly is a third mass M3, the mass of the balancing component is the second mass M2, and the product M2 L2 of the second mass M2 and the second distance L2 is greater than a product M3·L1 of the third mass M3 and the first distance L1.

In an example, the reciprocating power tool is a reciprocating saw.

In an example, the first ratio is less than 1.5.

In an example, a centroid of the transmission assembly is a third centroid C3, and a distance between the third centroid C3 and the spindle axis is less than 1 mm, and the first ratio is less than 1.5.

A reciprocating power tool includes a housing; a power assembly including an electric motor; a transmission assembly connected to the power assembly; a reciprocating assembly connected to the transmission assembly, performing a reciprocating motion, and mountable with a working accessory for an operation; and a balancing component for balancing a motion of the reciprocating assembly. A maximum distance the centroid of the reciprocating assembly mounted with the working accessory moves is a first distance L1; a maximum distance the centroid of the balancing component moves is a second distance L2; and a total mass of the working accessory and the reciprocating assembly is a third mass M3, the mass of the balancing component is a second mass M2, and a product M2 L2 of the second mass M2 and the second distance L2 is greater than a product M3 L1 of the third mass M3 and the first distance L1.

In an example, the balancing component moves along a direction substantially opposite to a motion direction of the reciprocating assembly to balance the reciprocating motion of the reciprocating assembly.

In an example, the transmission assembly includes a first transmission member, a transmission spindle, and an eccentric member, the transmission spindle extends along a spindle axis, the first transmission member is driven by the electric motor to rotate around the spindle axis, and the eccentric member rotates with the first transmission member to drive the reciprocating assembly to perform the reciprocating motion.

In an example, the centroid of the transmission assembly is a third centroid C3, and the distance between the third centroid C3 and the spindle axis is less than 2 mm.

In an example, the centroid of the transmission assembly is a third centroid C3, and the distance between the third centroid C3 and the spindle axis is less than 1 mm.

In an example, the electric motor includes a motor shaft rotatable around a first axis, and the first axis extends substantially along a front and rear direction of the reciprocating power tool.

In an example, the reciprocating power tool further includes a detection device and a controller, where the detection device is configured to detect an electrical signal of the electric motor, and when determining that the reciprocating power tool is in a no-load state, the controller reduces an idle speed of the electric motor.

### BRIEF DESCRIPTION OF DRAWINGS

FIG. 1 is a perspective view of a reciprocating saw according to an example of the present application;
FIG. 2 is a side view of the reciprocating saw shown in FIG. 1;
FIG. 3 is a plan view of part of the structure of the reciprocating saw shown in FIG. 1;
FIG. 4 is a plan view of part of the structure of the reciprocating saw shown in FIG. 1;
FIG. 5 is a plan view of the reciprocating saw shown in FIG. 4 with a balancing component removed;
FIG. 6 is a schematic view illustrating that a reciprocating assembly is located on a rearmost side in a front and rear direction;
FIG. 7 is a schematic view illustrating that a reciprocating assembly is located on a foremost side in a front and rear direction;
FIG. 8 is a side view of FIG. 6;
FIG. 9 is a side view of FIG. 7;
FIG. 10 is an internal sectional view of FIG. 6;
FIG. 11 is an internal sectional view of FIG. 7;
FIG. 12 is a perspective view of a reciprocating assembly;
FIG. 13 is a perspective view of a balancing component;
FIG. 14 is a perspective view of a transmission assembly;
FIG. 15 is a side view of FIG. 14;
FIG. 16 is a diagram of the test of vibration levels by use of technical solutions of the present application and the existing art;
FIG. 17 is a schematic view of different working accessories;
FIG. 18 is a perspective view of a reciprocating assembly, a transmission assembly, and a balancing component according to example two;
FIG. 19 is a side view of FIG. 18;
FIG. 20 is an internal sectional view of FIG. 18;
FIG. 21 is a perspective view of a reciprocating assembly, a transmission assembly, and a balancing component according to example three;
FIG. 22 is a side view of FIG. 21;
FIG. 23 is an internal sectional view of FIG. 21;
FIG. 24 is a perspective view of a balancing component according to example three; and
FIG. 25 is an electric control logic diagram related to the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

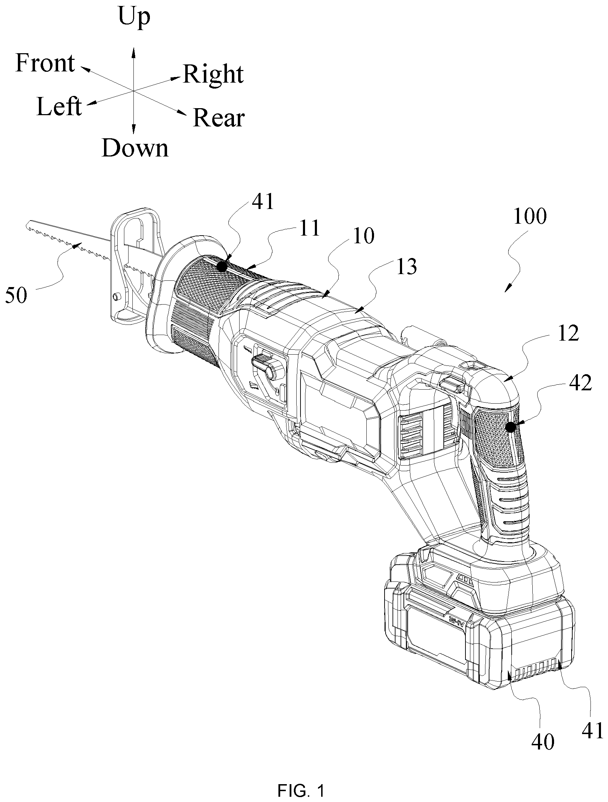

As shown in FIG. 1, a reciprocating tool of the present application is specifically a reciprocating cutting tool and may be a power tool that implements an operation through a reciprocating motion, such as a reciprocating saw and a jigsaw. In examples of the present application, a reciprocating saw 100 is used as an example for a detailed description.

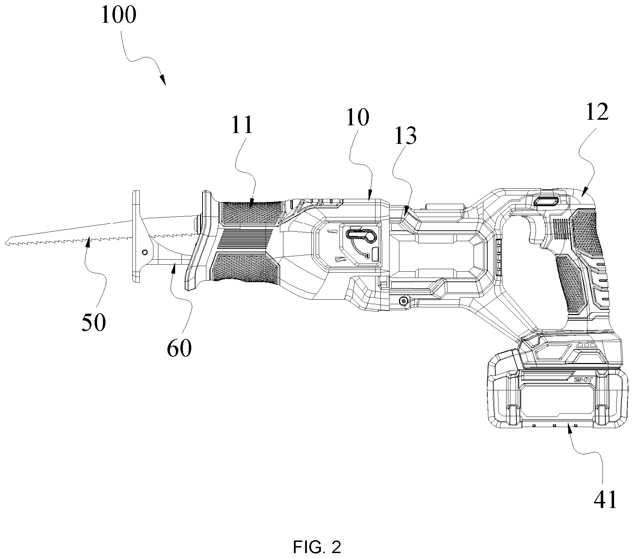

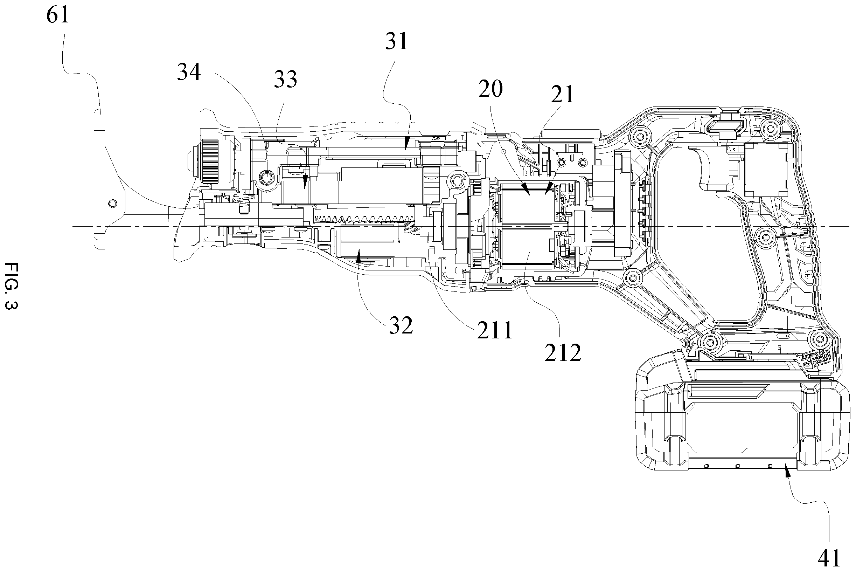

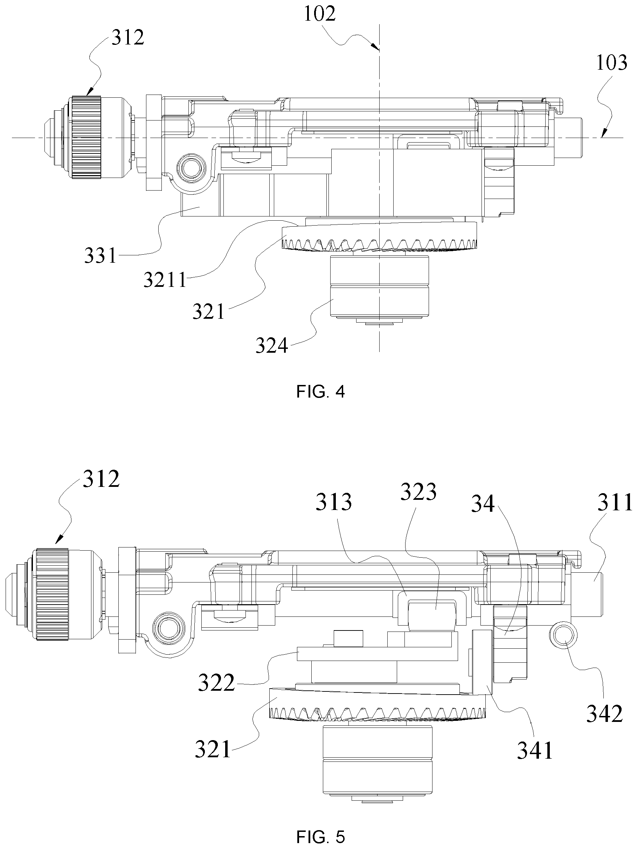

As shown in FIGS. 1 to 5, the reciprocating saw 100 includes a housing 10, a power assembly 20, a reciprocating assembly 31, a transmission assembly 32, a shock absorbing assembly 33, a cutter lifting assembly 34, an energy device 40, and a working accessory 50.

The power assembly 20 is disposed in the housing 10 and configured to provide power for the reciprocating saw 100. The power assembly 20 includes an electric motor 21, and the electric motor 21 includes a motor shaft 211 rotatable around a first axis 101 and a stator 212 for generating a magnetic field. The energy device 40 is mounted to the housing 10 and configured to provide an energy source. In this example, the energy device 40 is specifically a battery pack 41. Of course, the battery pack 41 may be separated from the housing 10, that is, the battery pack 41 is not directly mounted on a surface of the housing 10.

The housing 10 is fixedly connected to or integrally formed with a first grip 11 and a second grip 12 for a user to hold and a connecting portion 13 connecting the first grip 11 to the second grip 12. In a front and rear direction, the first grip 11 is disposed adjacent to the working accessory 50, the second grip 12 is disposed on the rear side of the reciprocating saw 100, and the second grip 12 is a handle.

A support seat assembly 60 is disposed at least partially in the housing 10, the support seat assembly 60 includes a support seat 61, the support seat 61 is mounted on the housing 10, and the housing 10 has at least one mounting position for mounting the support seat 61. It is to be noted that when the support seat 61 is fixedly connected to the housing 10, the mounting position refers to a position at which the support seat 61 is fixedly connected to the housing 10; when the support seat 61 is slidably connected to the housing 10, the mounting position refers to a position of an adjustment assembly for adjusting a distance the support seat 61 extends out of the housing 10.

The reciprocating assembly 31 refers to a working assembly that reciprocates to perform an operation in the reciprocating saw 100. One end of the reciprocating assembly 31 is connected to the transmission assembly 32, and the other end of the reciprocating assembly 31 is connected to the working accessory 50. The transmission assembly 32 converts a rotary motion output by the motor shaft 211 into a reciprocating motion of the reciprocating assembly 31. The reciprocating assembly 31 includes a sliding rod 311. When driven by the motor shaft 211, the sliding rod 311 can reciprocate along an axis of the sliding rod 311 relative to the housing 10. A chuck 312 is disposed at an end of the sliding rod 311, and the chuck 312 is configured to connect the working accessory 50 to clamp or loosen the working accessory 50. In this example, the working accessory 50 is specifically a saw blade.

The shock absorbing assembly 33 includes a balancing component 331. During the operation of the reciprocating saw 100, the balancing component 331 moves along a direction substantially opposite to a motion direction of the reciprocating assembly 31 to balance the reciprocating motion of the reciprocating assembly 31. The balancing component 331 is configured to balance the motion of the reciprocating assembly 31. The shock absorbing assembly 33 includes at least one balancing component 331. In an example, the shock absorbing assembly 33 may include two or more independent balancing components 331. In an example, the balancing component 331 has no need to accurately and synchronously move along the direction substantially opposite to the motion direction of the reciprocating assembly 31. That is to say, a change in the motion direction of the balancing component 331 may not synchronize with a change in the motion direction of the reciprocating assembly 31, for example, a short time interval exists between the changes. However, the balancing component 331 still has the function of balancing the motion of the reciprocating assembly 31.

In an example, the reciprocating saw 100 includes the cutter lifting assembly 34, and the cutter lifting assembly 34 includes a cutter lifting member 342. The cutter lifting assembly 34 is disposed adjacent to the reciprocating assembly 31 and can provide the reciprocating assembly 31 with a support force in a direction different from the motion direction of the reciprocating assembly 31 so that the reciprocating assembly 31 can rotate around an axis of the cutter lifting member 342, and the working accessory 50 is lifted up. In this example, the transmission assembly 32, the shock absorbing assembly 33, and the cutter lifting assembly 34 are all disposed in an accommodation cavity formed by the housing 10.

The transmission assembly 32 includes a first transmission member 321 and a transmission spindle 324. The transmission spindle 324 extends along a spindle axis 102. The first transmission member 321 is driven by the electric motor 21 to rotate around the spindle axis 102. The spindle axis 102 may also be defined as an axis of rotation of the first transmission member 321. In this example, the first transmission member 321 is a helical gear, and the first transmission member 321 and the motor shaft of the electric motor 21 form a gear mesh. The transmission assembly 32 further includes an eccentric member 322 and an eccentric portion 323. The eccentric member 322 is disposed on the upper side of the first transmission member 321. The eccentric portion 323 is connected to the eccentric member 322 and can be driven to rotate by the eccentric member 322. The eccentric portion 323 mates with a guide slot 313 of the sliding rod 311, and the eccentric portion 323 can slide within the guide slot 313. The length of the eccentric portion 323 in the front and rear direction is basically consistent with the width of an inner wall of the guide slot 313 in the front and rear direction. That is, the eccentric portion 323 is driven to rotate to implement the reciprocating motion of the sliding rod 311. In an example, the eccentric portion 323 has a spherical surface so that the eccentric portion 323 can better mate with the guide slot of the sliding rod 311 during rotation.

The cutter lifting assembly 34 includes a support member 341. The support member 341 is disposed between the sliding rod 311 and the first transmission member 321. The first transmission member 321 includes a cam surface 3211. The balancing component 331 is disposed between the cam surface 3211 and the sliding rod 311. During the operation of the reciprocating saw 100, the balancing component 331 can move along the direction opposite to the motion direction of the sliding rod 311 to balance the reciprocating motion of the sliding rod 311.

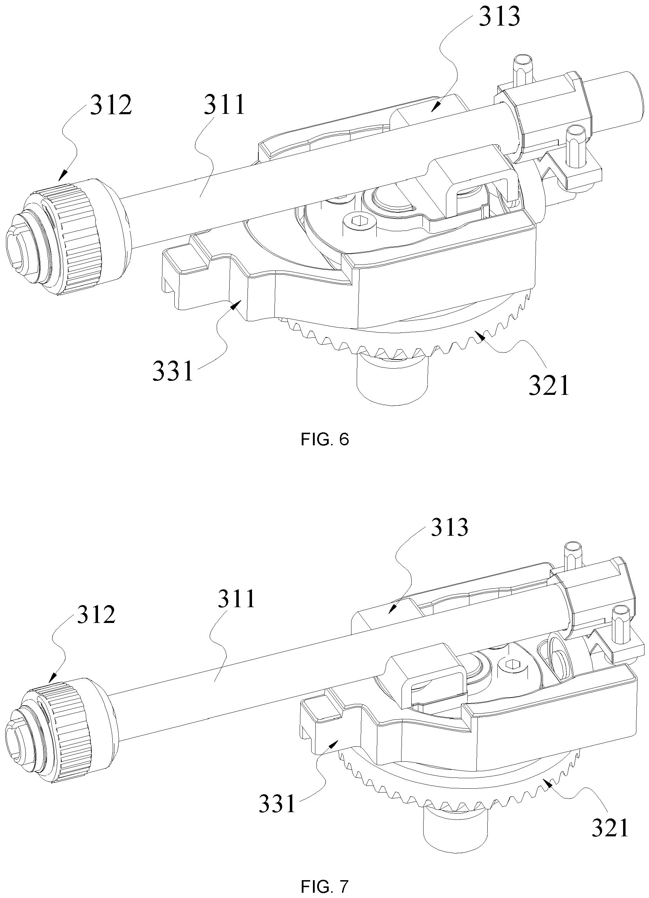

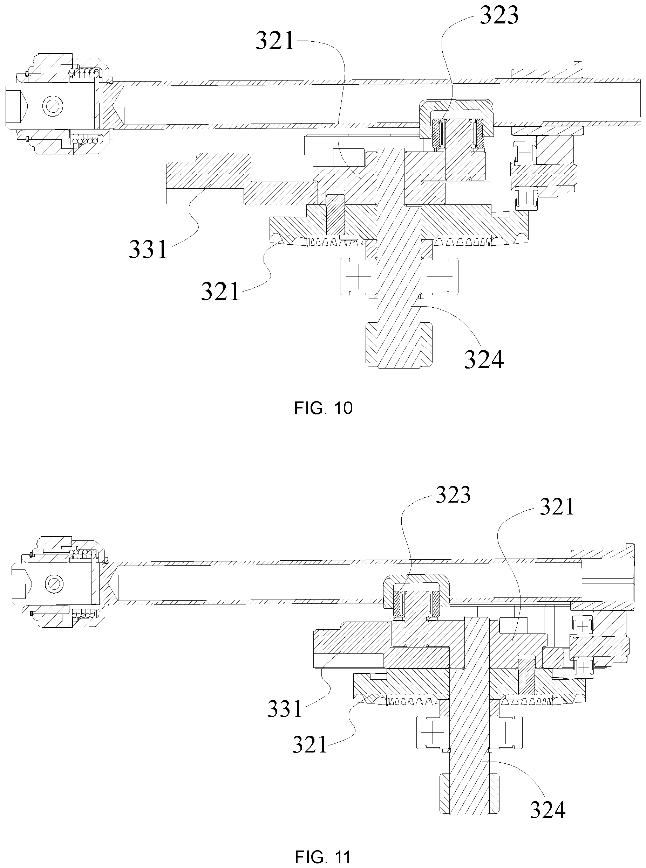

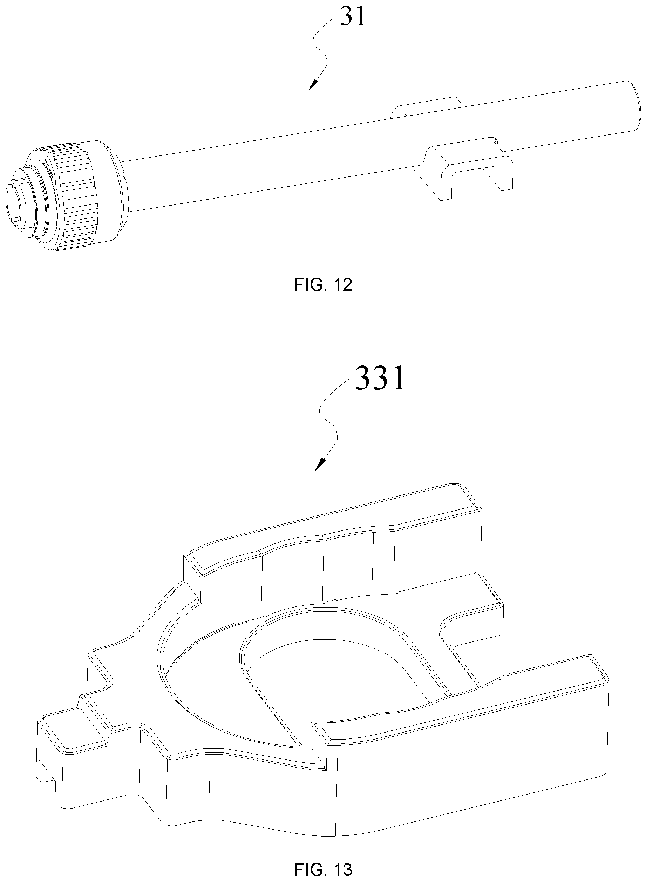

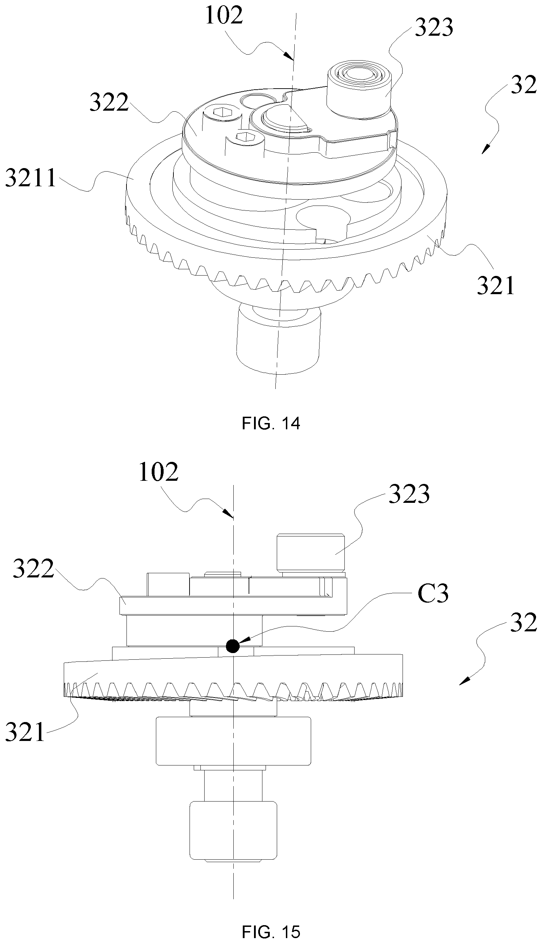

FIGS. 6, 8, and 10 are schematic views showing that the reciprocating assembly 31 moves to a rearmost end and the balancing component 331 moves to a foremost end. FIGS. 7, 9, and 11 are schematic views showing that the reciprocating assembly 31 moves to a foremost end and the balancing component 331 moves to a rearmost end. FIG. 12 is a schematic view showing the reciprocating assembly 31 in this example. FIGS. 14 and 15 are schematic views of the transmission assembly 32 in this example.

As shown in FIG. 12, in this example, the reciprocating assembly 31 includes the sliding rod 311, the chuck 312, and the guide slot 313. The rotation of the transmission assembly 32 drives the reciprocating assembly 31 to reciprocate and meanwhile drives the balancing component 331 to move along the motion direction opposite to that of the reciprocating assembly 31. It is to be noted that the changes in the motion directions of the reciprocating assembly 31 and the balancing component 331 may not synchronize completely, which is not limited herein.

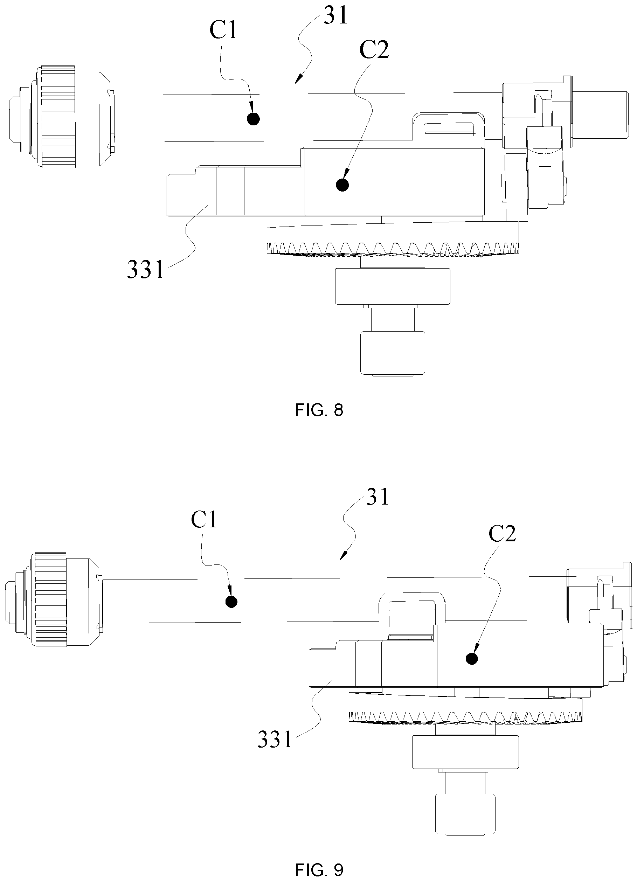

Referring to FIGS. 8, 9, and 15, the centroid of the reciprocating assembly 31 is a first centroid C1, the centroid of the balancing component 331 is a second centroid C2, and the centroid of the transmission assembly 32 is a third centroid C3. The mass of the reciprocating assembly 31 is a first mass M1 and the mass of the balancing component 331 is a second mass M2. A maximum distance the first centroid C1 moves is a first distance L1 and a maximum distance the second centroid C2 moves is a second distance L2. The ratio of a product M2 L2 of the second mass M2 and the second distance L2 to a product M1·L1 of the first mass M1 and the first distance L1 is greater than 1, that is, (M2·L2)/(M1·L1) is greater than 1.05.

The ratio of the product M2 L2 of the second mass M2 and the second distance L2 to the product M1 L1 of the first mass M1 and the first distance L1 is defined as a first ratio (M2·L2)/(M1·L1). In an example, the first ratio is greater than or equal to 1.07. In an example, the first ratio is greater than or equal to 1.1. In an example, the first ratio is greater than or equal to 1.05 and less than or equal to 2. In an example, the first ratio is greater than or equal to 1.1 and less than or equal to 1.5. In some examples, the first ratio is about 1.08, 1.1, 1.15, 1.2, 1.3, or 1.4.

The distance between the third centroid C3 and the spindle axis 102 is less than or equal to 2 mm. In an example, the distance between the third centroid C3 and the spindle axis 102 is less than or equal to 1 mm. In an example, the third centroid C3 basically coincides with the spindle axis 102. In such cases, it is considered that the momentum of the reciprocating assembly 31 and the momentum of the balancing component 331 are offset by each other.

In actual calculation, a maximum movement distance of the eccentric portion 323 may be determined to be the first distance L1, or a maximum movement distance of the central axis of the eccentric portion 323 may be determined to be the first distance L1. Similarly, the first distance L1 is not only a maximum distance the reciprocating assembly 31 moves alone but also a maximum distance the centroid of the reciprocating assembly 31 mounted with the working accessory 50 moves. If the mass of the working accessory 50 is not determined, the mass is uniformly 30 g for calculation.

The technical solutions of the present application are described in another manner below.

The maximum distance the centroid of the reciprocating assembly 31 mounted with the working accessory 50 moves is the first distance L1; the maximum distance the centroid of the balancing component 331 moves is the second distance L2; and the total mass of the working accessory and the reciprocating assembly is a third mass M3, the mass of the balancing component 331 is the second mass M2, and the product M2.L2 of the second mass M2 and the second distance L2 is greater than a product M3·L1 of the third mass M3 and the first distance L1. In other words, the ratio of the product M2 L2 of the second mass M2 and the second distance L2 to the product M3·L1 of the third mass M3 and the first distance L1 is a second ratio, where the second ratio is greater than 1, that is, (M2·L2)/(M3·L1) is greater than 1. In an example, the second ratio is greater than 1.03. In an example, the second ratio is greater than 1.06. In an example, the second ratio is greater than 1.09. In an example, the second ratio is greater than 1.1 and less than 1.5.

To actually test the damping effect of the reciprocating power tool of the present application, vibration amplitudes of the reciprocating saw of the present application and the reciprocating saw of the existing art in a no-load state are actually measured.

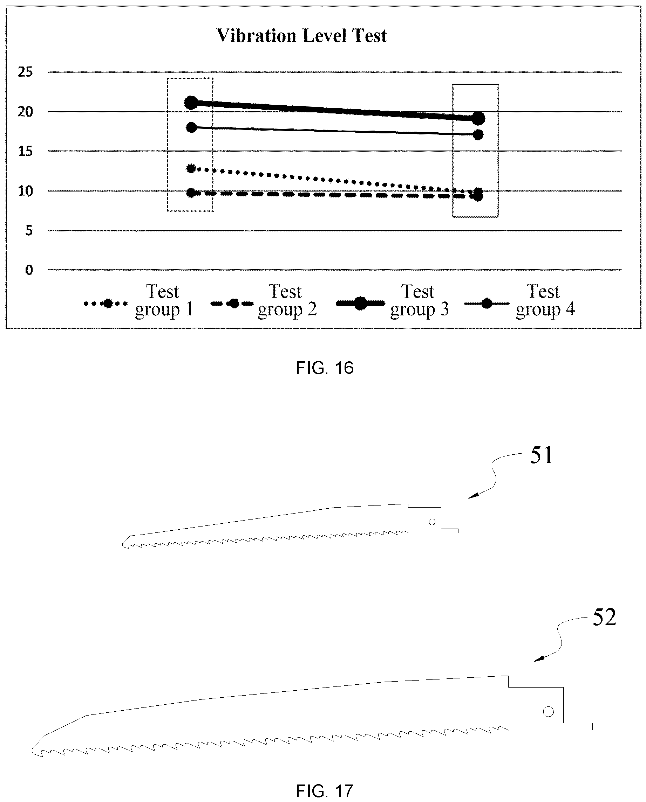

As shown in FIG. 16, reciprocating saws in a test group 1 and a test group 2 adopt the technical solutions disclosed in the present application and satisfy the limitation on the first ratio. Reciprocating saws in a test group 3 and a test group 4 are the existing art and do not adopt the technical solutions disclosed in the present application. As shown in FIG. 1, the applicant acquires vibration information of the first grip 11 and the second grip 12 of the reciprocating saw 100. A first acquisition point 41 is located on the first grip 11 and basically represents a position at which a thumb is placed when the first grip 11 is held by a hand of the user. A second acquisition point 42 is located on the second grip 12 and basically represents a position at which a thumb is placed when the second grip 12 is held by a hand of the user. In FIG. 16, for each test group, data in a left dashed box is a vibration value acquired at the first acquisition point 41, and data in a right solid-line box is a vibration value acquired at the second acquisition point 42. The vibration value here refers to an amplitude of a vibration acceleration, the unit of which is m/s². It is to be noted that the same saw blade is used in four groups of measurements, and the reciprocating saws in the four test groups cut the same type of wood.

As can be seen from the comparison of measurement results, when the no-load vibration is measured for all the test groups, the vibration values of the reciprocating saws adopting the technical solutions of the present application are significantly improved, and the vibration amplitude of the reciprocating saw improved according to the present application is reduced by at least 40% compared with that of the reciprocating saw in the existing art.

FIG. 17 shows two working accessories 50, which are a first working accessory 51 and a second working accessory 52, respectively. The mass of the first working accessory 51 is about 20 g and the mass of the second working accessory 52 is about 50 g. Since the mass of the working accessory 51 is less than the mass of the working accessory 52, the no-load vibration of the reciprocating saw 100 mounted with the first working accessory 51 is less than the no-load vibration of the reciprocating saw 100 mounted with the second working accessory 52. When the reciprocating saw 100 is mounted with the second working accessory 52, the vibration is more significant. Through market research, the applicant learns that when the user uses the reciprocating saw, an operation time during which the working accessory 50 with a relatively large mass is used is longer than an operation time during which the working accessory 50 with a relatively small mass is used. The technical solutions involved in the present application can reduce the no-load vibration of the reciprocating saw 100 mounted with the working accessory 50 with a relatively large mass, thereby improving the average hand feeling of the user when using the reciprocating saw 100.

It is to be noted that "a relatively large mass" and "a relatively small mass" mentioned in the present application are relative. For the same reciprocating power tool, the mass of the working accessory 50 mountable to the reciprocating power tool is within a certain range, and it is unnecessary to compare the masses of the working accessories 50 of different reciprocating power tools.

In the existing art, when the balancing component 331 of the reciprocating power tool is designed, the design principle is generally that the first ratio is greater than 1 and less than 1.05 or the second ratio is equal to 1. This is because, according to the law of conservation of momentum, the total momentum of the working accessory 50 and the reciprocating assembly 31 is completely balanced by the momentum of the balancing component 331 to achieve a full balance of the balancing component 331. That is to say, in the existing art, the second ratio is equal to 1.

In the present application, the second ratio is greater than 1 and the first ratio is greater than 1.05. In this manner, when the tool is mounted with a large-mass saw blade and is in the no-load state, the balancing component 331 can balance the motion of the reciprocating assembly as much as possible. Such a power tool tends to have a relatively low vibration value in the no-load state. No load here refers to the case where the electric motor 21 of the reciprocating power tool is started, and the working accessory 50 reciprocates but performs no cutting operation.

In another aspect, the applicant has found that in the field of reciprocating power tools, those skilled in the art often use the no-load vibration value as an indicator for evaluating a vibration situation of the reciprocating power tool, and therefore designers are always committed to reducing the no-load vibration value. However, the user tends to experience the vibration of the tool in practical applications, that is to say, the vibration in a loaded state rather than the no-lead state. Even if the reciprocating power tool does not use the high-mass saw blade, the technical solutions of the present application can still optimize a loaded vibration. The optimization of the loaded vibration is based on the sacrifice of the no-load vibration. After the technical solutions of the present application are used, even if the no-load vibration increases, the loaded vibration decreases significantly, which meets the actual requirement of the user for a "low vibration" of the tool.

To conclude, for the same reciprocating power tool, after the technical solutions of the present application are used, the vibration when the large-mass saw blade is used is optimized, and the loaded vibration is also optimized no matter which saw blade is used.

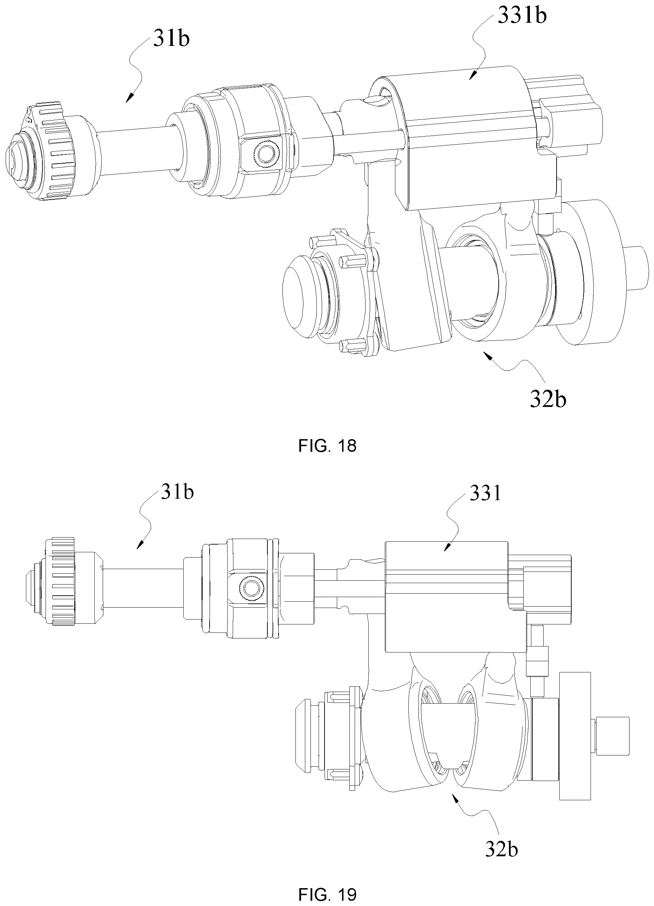

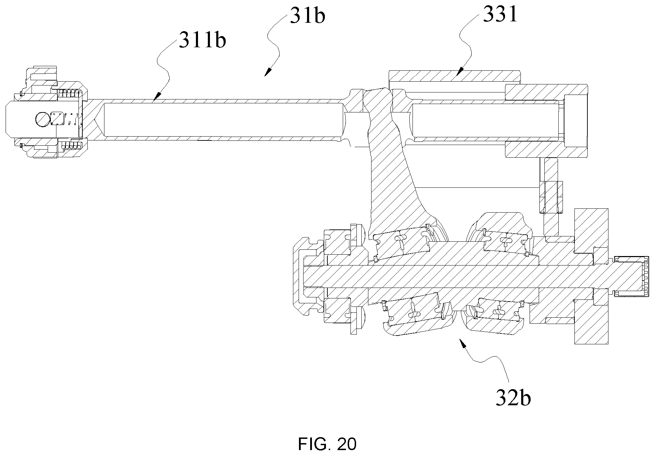

FIGS. 18 to 20 show a second example of the internal structure of the reciprocating power tool. A transmission assembly 32b drives a reciprocating assembly 31b to reciprocate and meanwhile drives a balancing component 331b to move along a motion direction opposite to that of the reciprocating assembly 31b. In this example, the transmission assembly 32b has a structure of dual swing links, and the balancing component 331b is sleeved on a sliding rod 311b and moves back and forth along the sliding rod 311b.

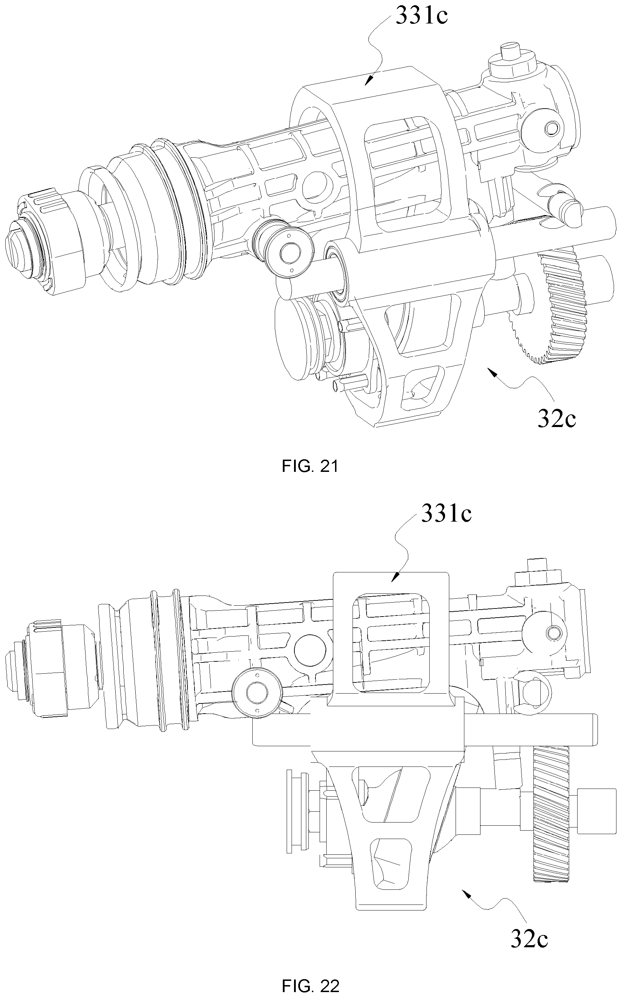

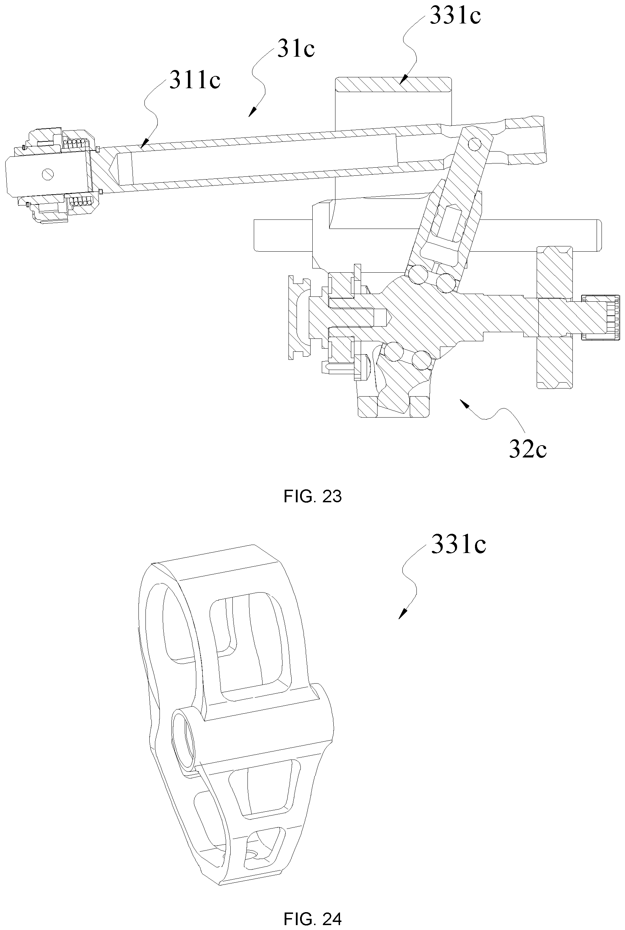

FIGS. 21 to 24 show a third example of the internal structure of the reciprocating power tool. A transmission assembly 32c drives a reciprocating assembly 31c to reciprocate and meanwhile drives a balancing component 331c to move along a motion direction opposite to that of the reciprocating assembly 31c. In this example, the transmission assembly 32c has a structure of dual swing links, and the balancing component 331c is sleeved outside at least part of the dual swing links. In this example, the transmission assembly 32c has a structure of a single swing link, and the balancing component 331c is sleeved on a sliding rod 311c and moves back and forth along the sliding rod 311c.

The two structures disclosed in the second example and the third example also satisfy the preceding limitation on the first ratio, which are not repeated here. Moreover, in addition to the three structures disclosed in the present application, the reciprocating power tool may have other structures. If the other structures also satisfy the preceding limitation on the first ratio, the other structures fall within the scope of the present application.

In addition to the preceding improvement in terms of transmission, the following electric control scheme may be combined to further reduce the no-load vibration. The reciprocating power tool includes the electric motor 21, the working accessory 50, a controller 70, and a detection device 71. The working accessory 50 may be the saw blade, and the electric motor 21 can drive the working accessory 50 to implement operations such as cutting.

The detection device 71 is configured to detect a rotational speed of the electric motor 21. The detection device 71 may directly detect the rotational speed of the electric motor 21 by using a sensor to detect a position change of the motor shaft or another component connected to the motor shaft or may detect other electrical parameters of the electric motor 21, for example, a current value and a counter-electromotive force of the electric motor 21. The controller 70 is configured to control the electric motor 21. The controller 70 controls the electric motor 21 by sending a control signal to a driver circuit (not shown in the figure) for driving the electric motor 21. The detection device 71 transmits the detected information to the controller 70, and the controller 70 determines whether the reciprocating power tool is in the no-load state and if so, reduces the rotational speed of the electric motor 21.

A control method involved in the present application mainly includes: determining whether the reciprocating power tool is in the no-load state; and if the reciprocating power tool is in the no-load state, driving the electric motor at a constant first rotational speed, where the first rotational speed is less than a rotational speed of the reciprocating power tool in the loaded state.

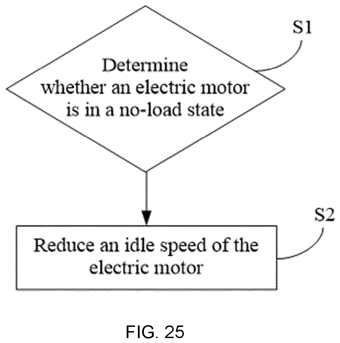

Referring to FIG. 25, as a specific solution, the control method includes the steps below.

In S1, it is determined whether the electric motor 21 is in the no-load state. If so, step S2 is performed.

In S2, an idle speed of the electric motor 21 is reduced. The idle speed is a running speed of the reciprocating power tool in the no-load state.

Whether the reciprocating power tool is in the no-load state may be determined in multiple manners. In an example, an electrical parameter of the reciprocating power tool, such as a current value, duty cycle, or demagnetization time of the reciprocating power tool, may be acquired so that it is determined whether the reciprocating power tool is in the no-load state. In an example, a sensor may be disposed on the reciprocating power tool so that it is determined whether the reciprocating power tool is in the no-load state. For example, the sensor is disposed at the front end of the reciprocating power tool. When the electric motor 21 is started and the sensor detects that the working accessory 50 is not subjected to a significant external force, it may be determined that the reciprocating power tool is in the no-load state.

In an example, the first rotational speed is configured to be a value less than the rotational speed in the loaded state. The rotational speed in the loaded state here refers to a normal rotational speed at which the reciprocating power tool performs an operation in any gear rather than a rotational speed of the tool under an abnormal working condition such as a locked rotor. In an example, the reciprocating power tool includes three working gears: a high gear, a medium gear, and a low gear. The first rotational speed at which the electric motor runs in the no-load state is less than a rotational speed in the low gear in the loaded state. In an example, the first rotational speed is about 2000 rpm and a maximum rotational speed in the loaded state is about 3000 rpm. In an example, the reciprocating power tool uses a first duty cycle in the no-load state and uses a second duty cycle in the loaded state, where the first duty cycle is less than the second duty cycle. For example, the first duty cycle is 60% and the second duty cycle is 100%. The electrical parameter of the electric motor 21 may be adjusted so that the rotational speed of the reciprocating power tool in the no-load state is adjusted, for example, the duty cycle is adjusted or a conduction angle is adjusted, which is not limited here.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A reciprocating power tool, comprising:
a housing;
a power assembly comprising an electric motor;
a transmission assembly connected to the power assembly;
a reciprocating assembly connected to the transmission assembly and performing a reciprocating motion; and
a balancing component for balancing a motion of the reciprocating assembly;
wherein
a maximum distance a centroid of the reciprocating assembly moves is a first distance L1; a maximum distance a centroid of the balancing component moves is a second distance L2; a mass of the reciprocating assembly is a first mass M1, and a mass of the balancing component is a second mass M2; a ratio of a product M2 L2 of the second mass M2 and the second distance L2 to a product M1·L1 of the first mass M1 and the first distance L1 is a first ratio, wherein the first ratio is greater than 1.05, that is, (M2·L2)/(M1·L1) is greater than 1.05.

2. The reciprocating power tool of claim 1, wherein the balancing component moves along a direction substantially opposite to a motion direction of the reciprocating assembly to balance the reciprocating motion of the reciprocating assembly.

3. The reciprocating power tool of claim 1, wherein the transmission assembly comprises a first transmission member, a transmission spindle, and an eccentric member, the transmission spindle extends along a spindle axis, the first transmission member is driven by the electric motor to rotate around the spindle axis, and the eccentric member rotates with the first transmission member to drive the reciprocating assembly to perform the reciprocating motion.

4. The reciprocating power tool of claim 3, wherein a centroid of the transmission assembly is a third centroid C3, and a distance between the third centroid C3 and the spindle axis is less than 2 mm.

5. The reciprocating power tool of claim 3, wherein a centroid of the transmission assembly is a third centroid C3, and a distance between the third centroid C3 and the spindle axis is less than 1 mm.

6. The reciprocating power tool of claim 1, wherein the electric motor comprises a motor shaft rotatable around a first axis, and the first axis extends substantially along a front and rear direction of the reciprocating power tool.

7. The reciprocating power tool of claim 1, wherein the first ratio is greater than 1.07.

8. The reciprocating power tool of claim 1, wherein the first ratio is greater than 1.1.

9. The reciprocating power tool of claim 1, wherein the first ratio is less than 1.5.

10. The reciprocating power tool of claim 1, further comprising a detection device and a controller, wherein the detection device is configured to detect an electrical signal of the electric motor, and when determining that the reciprocating power tool is in a no-load state, the controller reduces an idle speed of the electric motor.

11. The reciprocating power tool of claim 1, wherein the reciprocating assembly is mountable with a working accessory for an operation.

12. The reciprocating power tool of claim 11, wherein a total mass of the working accessory and the reciprocating assembly is a third mass M3, and the product M2 L2 of the second mass M2 and the second distance L2 is greater than a product M3 L1 of the third mass M3 and the first distance L1.

13. The reciprocating power tool of claim 11, wherein the reciprocating power tool is a reciprocating saw.

14. The reciprocating power tool of claim 8, wherein the first ratio is less than 1.5.

15. The reciprocating power tool of claim 3, wherein a centroid of the transmission assembly is a third centroid C3, and a distance between the third centroid C3 and the spindle axis is less than 1 mm, and the first ratio is less than 1.5.
